# EUROPEAN PATENT SPECIFICATION

(11) **EP 1 643 142 B1**
(45) Date of publication and mention of the grant of the patent: **18.08.2010**
(21) Application number: 05103253.0
(22) Date of filing: 21.04.2005
(51) Int. Cl.: F16C 17/12

(54) **Foil bearing and turbo compressor**
Folienlager und Turbokompressor
Palier à feuilles et turbocompresseur

(30) Priority: 13.08.2004 KR 2004063930
(43) Date of publication of application: 05.04.2006
(73) Proprietor: SAMSUNG ELECTRONICS CO., LTD., Suwon-si, Gyeonggi-do (KR)
(72) Inventor: KIM, Sang Wook, Gyeonggi-Do (KR); CHANG, Phil Soo, Gyeonggi-Do (KR); CHOI, Ji Hoon, Gyeonggi-Do (KR)
(74) Representative: Grey, Ian Michael

(56) References cited:
- EP-A- 1 270 971
- US-A- 5 871 284
- US-A- 5 961 217
- US-A- 6 158 893

## Description

The present invention relates to a thrust bearing comprising a thrust bearing comprising a base and a plurality of elastic foils having different stiffness values and different radii of curvature from each other wherein each of the elastic foils has one end supported by the base in particular a thrust bearing for use in a turbo compressor. Such a thrust bearing is known from US 5871284A. A bearing is also known from EP 1270971A.

Turbo compressors are used to compress gas, such as air or a refrigerant gas. In this type of compressor, an impeller is rotated due to the driving force of a motor to generate a centrifugal force to intake and compress the gas.

As is disclosed in Korean Patent Registration No. 10-0399325, the turbo compressor is provided with radial bearings and thrust bearings to support the rotational shaft according to the direction of a load applied to the shaft.

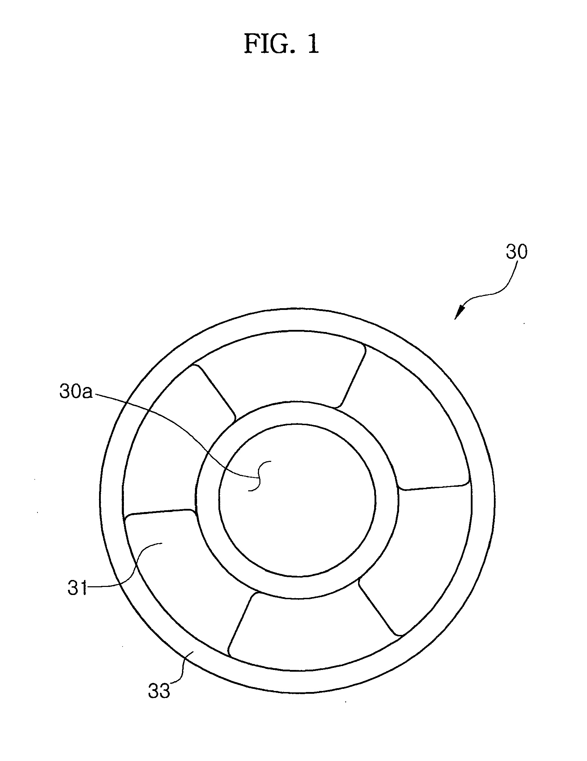

Referring to Figure 1, a conventional thrust bearing 30 has a configuration wherein several elastic foils 31 overlap each other on one side of a disc-shaped base 33 having an opening 30a formed at the centre thereof so that the elastic foils 31 contact a disc (not shown) attached to a rotational shaft (not shown). When the rotational shaft rotates, a gaseous film is subsequently formed between the disc and the elastic foils 31 such that the disc is spaced a predetermined distance from the elastic foils 31.

With the conventional bearing 30, however, when the stiffness of the elastic foils 31 is increased in order to enhance the load capacity of the bearing 30. As a result, a great amount of friction is generated between the disc and the elastic foils 31, resulting in damage to a surface of the elastic foils and a mechanical malfunction of the turbo compressor.

The present invention seeks to provide a bearing which overcomes or substantially alleviates the problems discussed above and in which a bearing for use in a turbo compressor enhances the load capacity of a disc and prevents damage to a surface of a plurality of elastic foils of the bearing and the mechanical malfunction of the turbo compressor.

A bearing according to the present invention is characterised in that the other end of each elastic foil is placed on an adjacent elastic foil.

In one embodiment, the base is disc-shaped and the elastic foils are arranged circumferentially thereon.

Preferably, the elastic foils comprise an inner set of foils circumferentially arranged on an inner portion of the base and an outer set of foils circumferentially arranged on an outer portion of the base.

In a preferred embodiment, the inner set of foils have a lower stiffness and a higher radius of curvature than the outer set of foils.

Preferably, the end of each of the elastic foils supported by the base is fixed to the base via a supporting member.

Conveniently, each arcuately shaped resilient foil of the inner and outer sets curve arcuately away from the base in an axial direction with respect to the axis of rotation of the shaft, the radius of curvature in the axial direction of one of said sets being greater than the radius of curvature of the other set so that said set with the greater radius of curvature engages a bearing surface prior to the other set.

Advantageously, the radius of curvature of the outer and inner sets is such that the inner set of arcuately shaped foils engage a bearing surface prior to the outer set.

A turbo compressor including a bearing according to the present invention.

Embodiments of the present invention will now be described, by way of example only, with reference to Figures 2 to 5 of the accompanying drawings, in which:
Figure 1 is a front view of a conventional bearing;
Figure 2 is a cross sectional view of a turbo compressor;
Figure 3 is a front view of a bearing of the turbo compressor;
Figure 4 is a cross sectional view taken along the line IV-IV of Figure 3 of the bearing of the turbo compressor; and
Figure 5 is a cross sectional view of the bearing of the turbo compressor showing a state of the disc closely contacting the bearing.

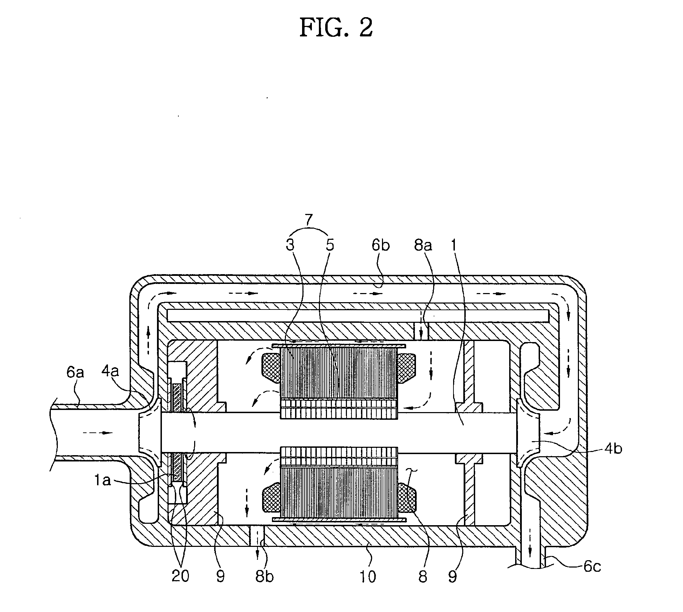

Referring to the drawings, there is shown in Figure 2 a turbo compressor comprising a housing 10 with a driving chamber 8 formed therein. Across the driving chamber 8 is located a rotational shaft 1. A rotator 5 is positioned around the centre of the rotational shaft 1 and a stator 3 is located at an outer portion of the rotator 5 corresponding to a location of the rotator 5 within a wall of the driving chamber 8. A driving motor 7 comprising the stator 3 and the rotator 5 forces rotation of the rotational shaft by virtue of electromagnetic cooperation of the stator 3 and the rotator 5 when electric power is applied from a power supply to the driving motor 7. Radial bearings 9 and thrust bearings 20 support the rotational shaft 1 within the driving chamber 8. The thrust bearings 20 are located on both sides of a disc 1a provided around an outer periphery of the rotational shaft 1 such that they contact the disc 1a thereby supporting the rotational shaft 1 in an axial direction of the rotational shaft 1.

The rotational shaft 1 is provided with impellers 4a and 4b fixed to both ends of the rotational shaft 1. A first stage impeller 4a is provided to an intake port of the housing 10 and a second stage impeller 4b is provided to a discharge port of the housing 10. The housing 10 is formed with an intake pipe 6a which communicates with the outside of the housing in order to allow a refrigerant to be supplied to the first stage impeller 4a and with a discharge pipe 6c which communicates with the outside in order to allow a compressed refrigerant to be discharged from the second stage impeller 4b to the outside. The first stage impeller 4a communicates with the second stage impeller 4b via a connecting pipe 6b.

Accordingly, when the driving motor 7 rotates the rotational shaft 1, the first stage impeller 4a and the second stage impeller 4b are also rotated. The refrigerant, having flowed into the housing 10 through the intake pipe 6a by virtue of rotation of the first stage impeller 4a, is primarily compressed by the first stage impeller 4a and is then supplied to the second stage impeller 4b through the connecting pipe 6b. The second stage impeller 4b secondarily compresses the primarily compressed refrigerant and discharges secondarily compressed refrigerant to the discharge pipe 6c.

Meanwhile, in order to prevent the efficiency of the turbo compressor from being lowered due to heat generated by the driving motor 7, the housing 10 is formed with a cooling refrigerant intake port 8a and a cooling refrigerant discharge port 8b which communicate with the driving chamber 8. That is, the interior of the driving chamber 8 is cooled by forcing a portion of the refrigerant circulating within a refrigerant cycle to flow to the driving chamber 8 through the cooling refrigerant intake port 8a and to return to the refrigerant cycle through the cooling refrigerant discharge port 8b.

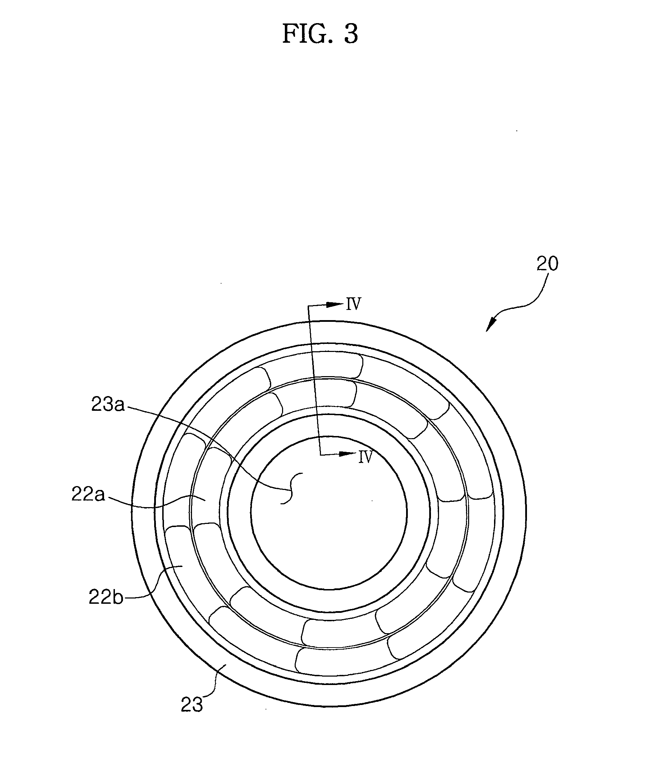

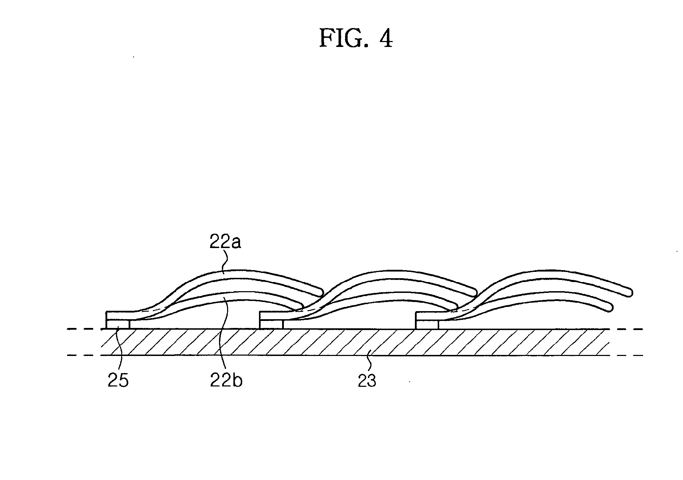

Meanwhile, referring to Figures 3 and 4, the bearing 20 according to the present invention has a disc-shaped base 23 with an opening 23a formed at the centre of the base 23 and a plurality of elastic foils 22a and 22b attached to one side of the base 23. The elastic foils 22a and 22b comprise inner foils 22a attached to an inner portion of the base 23 and outer foils 22b attached to an outer portion of the base 23. The elastic foils 22a and 22b are circumferentially arranged on the one side of the base such that the inner foils 22a overlap each other and the outer foils 22b overlap each other.

Referring to Figure 4, each of the elastic foils 22a and 22b has one end fixed to the base 23 via a supporting member 25 and the other end positioned on an upper portion of the other adjacent elastic foil respectively. Specifically, the inner foils 22a have a radius of curvature higher than that of the outer foils 22b and have a separation from the base 23 higher than that of the outer foils 22b. Furthermore, the inner foils 22a have a relatively low stiffness compared with that of the outer foils 22b.

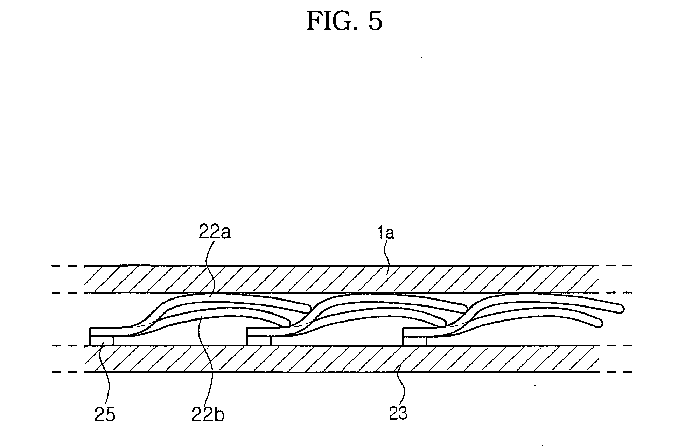

Referring to Figure 5, when the rotational shaft 1 and a disc 1a provided to the rotational shaft 1 are not rotated or at an initial time of the rotation of the rotational shaft 1, the inner foils 22a contact the disc 1a while the outer foils 22b do not contact the disc 1a. As a result, since the contact between the disc 1a and the bearing 20 mainly occurs at the inner foils 22a having the lower stiffness, abrasion of the elastic foils 22a and 22b caused by the friction between the disc 1a and the bearing 20 is reduced and thus the mechanical malfunctions of the turbo compressor are reduced at the same time.

Furthermore, when a predetermined period is passed after the rotational shaft 1 is driven, gaseous films having a predetermined space are formed between the disc 1a and the inner foils 22a and between the disc 1a and the outer foils 22b so that the inner foils 22a and the outer foils 22b are separated from the disc 1a. At this time, the disc 1a is simultaneously supported by the inner foils 22a and the outer foils 22b so that the load is dispersed to the inner foils 22a and the outer foils 22b thereby increasing the load capacity of the disc 1a.

Although a few embodiments of the present invention have been shown and described, it will be appreciated by those skilled in the art that changes may be made in these embodiments The scope of the invention is defined in the claims and the foregoing description should be regarded as a description of a preferred embodiment only.

## Claims

1. A thrust bearing comprising a base (23) and a plurality of elastic foils (22a, 22b) having different stiffness values and different radii of curvature from each other wherein each of the elastic foils (22a, 22b) has one end supported by the base (23) and **characterised in that** the other end of each elastic foil (22a, 22b) is placed on an adjacent elastic foil (22a, 22b).

2. The thrust bearing according to claim 1 wherein the base (23) is disc-shaped and the elastic foils (22a, 22b) are circumferentially arranged thereon.

3. The thrust bearing according to claim 2 wherein the elastic foils (22a, 22b) comprise an inner set of foils (22a) circumferentially arranged on an inner portion of the base (23) and an outer set of foils (22b) circumferentially arranged on an outer portion of the base (23).

4. The thrust bearing according to claim 3 wherein the inner set of foils (22a) have a lower stiffness and a higher radius of curvature than the outer set of foils (22b).

5. The thrust bearing according to any preceding claim wherein the one end of each of the elastic foils (22a, 22b) supported by the base (23) is fixed to the base (23) via a supporting member (25).

6. The thrust bearing according to claim 3 wherein the elastic foils (22a,22b)are overlapping arcuately shaped resilient foils attached to and upstanding from the base (23) so as to circumferentially surround a rotatable shaft (1) on which the bearing is mountable, said foils being configured to engage a bearing surface during rotation of the shaft (1) wherein the outer set of overlapping arcuately shaped foils (22b) circumferentially surrouns the inner set of overlapping arcuately shaped foils (22a) and the stiffness of the inner set (22a) is less than the stiffness of the outer set (22b).

7. The thrust bearing according to claim 6 wherein each arcuately shaped resilient foil of the inner and outer sets (22a,22b) curve arcuately away from the base (23) in an axial direction with respect to the axis of rotation of the shaft (1), the radius of curvature in the axial direction of one of said sets (22a, 22b) being greater than the radius of curvature of the other set (22a,22b) so that said set (22a,22b) with the greater radius of curvature engages a bearing surface prior to the other set (22a,22b).

8. The thrust bearing according to claim 6 wherein the radius of curvature of the outer and inner sets (22a,22b) is such that the inner set (22a) of arcuately shaped foils engage a bearing surface prior to the outer set (22b).

9. A turbo compressor including a thrust bearing according to any preceding claim.

10. The turbo compressor according to claim 9 wherein the turbo compressor further comprises a rotational shaft (1) having at least one impeller (4a,4b) and a disc (1a) equipped thereto and the disc (1a) is supported by the elastic foils (23a,23b).

## Patentansprüche

1. Drucklager, umfassend eine Basis (23) und eine Vielzahl von elastischen Folien (22a, 22b) mit verschiedenen Steifigkeitswerten und verschiedenen Krümmungshalbmessern voneinander, wobei ein Ende jeder der elastischen Folien (22a, 22b) von der Basis (23) getragen wird, und **dadurch gekennzeichnet, dass** das andere Ende jeder der elastischen Folien (22a, 22b) auf einer angrenzenden elastischen Folie (22a, 22b) platziert ist.

2. Drucklager nach Anspruch 1, wobei die Basis (23) scheibenförmig ist und die elastischen Folien (22a, 22b) peripherisch darauf angeordnet sind.

3. Drucklager nach Anspruch 2, wobei die elastischen Folien (22a, 22b) einen inneren Satz von Folien (22a) umfassen, die peripherisch an einem inneren Abschnitt der Basis (23) angeordnet sind, und einen äußeren Satz von Folien (22b), die peripherisch an einem äußeren Abschnitt der Basis (23) angeordnet sind.

4. Drucklager nach Anspruch 3, wobei der innere Satz von Folien (22a) eine geringere Steifigkeit und einen größeren Krümmungshalbmesser als der äußere Satz von Folien (22b) aufweist.

5. Drucklager nach einem der vorstehenden Ansprüche, wobei das eine Ende jeder der elastischen Folien (22a, 22b), das von der Basis (23) getragen wird, über ein Trageglied (25) an der Basis (23) befestigt ist.

6. Drucklager nach Anspruch 3, wobei die elastischen Folien (22a, 22b) bogenförmige federnde Folien, die an der Basis (23) angebracht sind und darauf aufrecht stehen, überlappen, um eine drehbare Welle (1), auf der das Lager montierbar ist, peripherisch zu umgeben, wobei die Folien konfiguriert sind, um mit einer Lagerfläche während der Drehung der Welle (1) in Eingriff zu kommen, wobei der äußere Satz von überlappenden bogenförmigen Folien (22b) den inneren Satz von überlappenden bogenförmigen Folien (22a) peripherisch umgibt und die Steifigkeit des inneren Satzes (22a) geringer ist als die Steifigkeit des äußeren Satzes (22b).

7. Drucklager nach Anspruch 6, wobei jede bogenförmige federnde Folie des inneren und äußeren Satzes (22a, 22b) sich bogenförmig weg von der Basis (23) in einer axialen Richtung in Bezug auf die Drehachse der Welle (1) krümmt, wobei der Krümmungshalbmesser in der axialen Richtung einer der Sätze (22a, 22b) größer als der Krümmungshalbmesser des anderen Satzes (22a, 22b) ist, so dass der Satz (22a, 22b) mit dem größeren Krümmungshalbmesser vor dem anderen Satz (22a, 22b) mit einer Lagerfläche in Eingriff kommt.

8. Drucklager nach Anspruch 6, wobei der Krümmungshalbmesser des äußeren und inneren Satzes (22a, 22b) derart ist, dass der innere Satz (22a) von bogenförmigen Folien vor dem äußeren Satz (22b) mit einer Lagerfläche in Eingriff kommt.

9. Turbokompressor, der ein Drucklager nach einem der vorstehenden Ansprüche enthält.

10. Turbokompressor nach Anspruch 9, wobei der Turbokompressor weiter eine drehende Welle (1) umfasst, die mindestens ein Flügelrad (4a, 4b) und eine daran angebrachte Scheibe (1a) aufweist, und die Scheibe (1a) von den elastischen Folien (23a, 23b) getragen wird.

## Revendications

1. Palier de butée comprenant une base (23) et une pluralité de feuilles métalliques élastiques (22a, 22b) présentant différentes valeurs de rigidité et différents rayons de courbure l'une par rapport à l'autre, cas dans lequel une extrémité de chacune des feuilles métalliques élastiques (22a, 22b) soutenue par la base (23) et **caractérisé en ce que** l'autre extrémité de chaque feuille métallique élastique (22a, 22b) est placée sur une feuille métallique élastique (22a, 22b) adjacente.

2. Palier de butée selon la revendication 1, la base (23) étant en forme de disque et les feuilles métalliques élastiques (22a, 22b) étant agencées sur celle-ci de façon circonférentielle.

3. Palier de butée selon la revendication 2, les feuilles métalliques élastiques (22a, 22b) comportant un ensemble interne de feuilles métalliques (22a) agencées de façon circonférentielle sur une partie interne de la base (23) et un ensemble externe de feuilles métalliques (22b) agencées de façon circonférentielle sur une partie externe de la base (23).

4. Palier de butée selon la revendication 3, l'ensemble interne de feuilles métalliques (22a) ayant une rigidité plus faible et un rayon de courbure plus élevé que l'ensemble externe de feuilles métalliques (22b).

5. Palier de butée selon l'une quelconque des revendications précédentes, ladite extrémité de chacune des feuilles métalliques élastiques (22a, 22b) soutenue par la base (23) étant fixée à la base (23) par l'intermédiaire d'un élément de support (25).

6. Palier de butée selon la revendication 3, les feuilles métalliques élastiques (22a, 22b) étant en chevauchement sur des feuilles métalliques résilientes en forme arquée qui sont attachées sur la base (23), et sont dressées à partir de celle-ci de sorte à entourer de façon circonférentielle un arbre rotatif (1) sur lequel le palier peut être monté, lesdites feuilles métalliques étant configurées de manière à s'engager avec une surface de palier pendant la rotation de l'arbre (1), cas dans lequel l'ensemble externe de feuilles métalliques chevauchantes de forme arquée (22b) entoure de façon circonférentielle l'ensemble interne de feuilles métalliques chevauchantes de forme arquée (22a), et la rigidité de l'ensemble interne (22a) est inférieure à la rigidité de l'ensemble externe (22b).

7. Palier de butée selon la revendication 6, chaque feuille métallique résiliente en forme arquée des ensembles interne et externe (22a, 22b) s'éloignant en courbe arquée de la base (23) suivant un sens axial par rapport à l'axe de rotation de l'arbre (1), le rayon de courbure dans le sens axial de l'un desdits ensembles (22a, 22b) étant plus grand que le rayon de courbure de l'autre ensemble (22a, 22b) de sorte que ledit ensemble (22a, 22b) présentant le rayon de courbure plus grand va s'engager avec une surface de palier avant l'autre ensemble (22a, 22b).

8. Palier de butée selon la revendication 6, le rayon de courbure des ensembles interne et externe (22a, 22b) étant tel que l'ensemble interne (22a) de feuilles métalliques de forme arquée va s'engager avec une surface de palier avant l'ensemble externe (22b).

9. Turbocompresseur englobant un palier de butée selon l'une quelconque des revendications précédentes.

10. Turbocompresseur selon la revendication 9, le turbocompresseur comprenant en outre un arbre rotatif (1) comportant au moins une roue mobile (4a, 4b) et un disque (1a) qui est solidaire de celle-ci et le disque (1a) est soutenu par les feuilles métalliques élastiques (23a, 23b).
